# EUROPEAN PATENT APPLICATION

(11) **EP 4 283 396 A1**
(43) Date of publication of application: **29.11.2023**
(21) Application number: 21920527.5
(22) Date of filing: 22.06.2021
(51) Int. Cl.: G03B 15/05, H05B 45/20

(54) **COLOR CORRECTION DEVICE AND COLOR CORRECTION SYSTEM FOR EXTERNAL FLASH LAMP**

(30) Priority: 22.01.2021 CN 202110109396; 22.01.2021 CN 202120192379 U
(71) Applicant: Yingyou Equipment Co., Ltd., Shenzhen, Guangdong 518000 (CN)
(72) Inventor: ZENG, Weiling, Shenzhen, Guangdong 518000 (CN)
(74) Representative: Studio Torta S.p.A.
(86) International application number: PCT/CN2021/101594
(87) International publication number: WO 2022/156146

(57) **Abstract**

A color correction device (20) and a color correction system for an external flash lamp. The color correction device (20) comprises an illumination information acquisition circuit (21), a color correction processing circuit (22), and a communication circuit (23). The illumination information acquisition circuit (21) is used for acquiring illumination information of an external flash lamp; the color correction processing circuit (22) is electrically connected to the illumination information acquisition circuit (21) to be used for performing color correction processing according to the illumination information and generating color correction result information; the communication circuit (23) is used for communicating with the external flash lamp; and the communication circuit (23) is electrically connected to the color correction processing circuit (22) so as to receive the color correction result information and send the color correction result information to the external flash lamp, so that the external flash lamp corrects illumination according to the color correction result information. The present invention achieves color correction of an external flash lamp.

## Description

### FIELD OF TECHNOLOGY

The present application relates to the technical field of photographing-specific flash, and in particular, to a color correction device and a color correction system for an external flash.

### BACKGROUND

With the development of mobile communication technology, mobile terminals play an increasingly important role in people's life and work. Especially there are some mobile terminal devices with photographing functions, such as mobile phone, MP4, PDA, and notebook computer. The camera functions inherent in these mobile terminal devices can bring great fun to people's lives. Photographing requires light sources, and artificial light is often needed to assist in photographing besides natural light. An artificial light source of the mobile terminal with photographing functions often cannot meet the actual use requirements. Therefore, people often use an external flash to assist in photographing.

However, after long-term use of LED lamp beads in the external flash, there will be deviations in chroma and illumination intensity, resulting in the fact that actual illumination brightness, chroma, and other illumination parameters cannot reach preset illumination parameters so that the expected light filling effect cannot be realized.

The above information disclosed in the Background is only for the enhancement of understanding of the background of the present application and therefore it may include information that does not constitute prior art known to a person of ordinary skill in the art.

### SUMMARY

An object of the present application is to provide a color correction device, so as to implement color correction for an external flash.

To solve the above-mentioned technical problem, the present application adopts the following technical solutions:
According to one aspect of the present application, a color correction device is provided in the present application, configured to perform color correction on an external flash, including:
an illumination information acquisition circuit configured to acquire illumination information of the external flash;
a color correction processing circuit electrically connected to the illumination information acquisition circuit, so as to be configured to perform color correction processing according to the illumination information and generate color correction result information; and
a communication circuit configured to communicate with the external flash, the communication circuit being electrically connected to the color correction processing circuit, so as to receive the color correction result information and send the color correction result information to the external flash, so that the external flash corrects illumination according to the color correction result information.

According to an embodiment in the present application, the communication circuit includes a wireless communication circuit, and the wireless communication circuit is electrically connected to the color correction processing circuit, so as to receive the color correction result information and transmit the color correction result information to the external flash through wireless transmission.

According to an embodiment in the present application, the communication circuit includes a communication interface, and the communication interface is electrically connected to the color correction processing device, and the communication interface is electrically connected to the external flash through a connection wire, so as to transmit the color correction result information to the external flash.

According to an embodiment in the present application, the color correction device further includes a programming circuit, and the programming circuit is electrically connected to the color correction processing circuit and the external flash, so as to program the color correction result information output through the communication interface on a control chip of the external flash.

According to an embodiment in the present application, the color correction device further includes a timing control circuit, and the timing control circuit is electrically connected to the illumination information acquisition circuit and the external flash; and the timing control circuit is configured to control the external flash to emit light at a preset timing and control the illumination information acquisition circuit to acquire the illumination information at a preset timing.

According to an embodiment in the present application, the illumination information includes one or more of brightness, chroma and saturation of the light emitted by the external flash.

According to an embodiment in the present application, the external flash includes a plurality of LED light sources; and the illumination information includes one or more of brightness, chroma, and saturation of each LED light source of the plurality of LED light sources.

According to an embodiment in the present application, the color correction device includes a main body and a light pick-up portion protruding from one side of the main body, and the illumination information acquisition circuit is located in the light pick-up portion.

According to an embodiment in the present application, the main body is detachably connected to the light pick-up portion.

According to an embodiment in the present application, the color correction device further includes a human-computer interaction assembly, and the human-computer interaction assembly is provided on the main body; and
the human-computer interaction assembly is electrically connected to the illumination information acquisition circuit and the color correction processing circuit, and the human-computer interaction assembly is used for one or more of receiving a color correction instruction, receiving a color correction setting parameter, and switching color correction modes.

According to an embodiment in the present application, the human-computer interaction assembly includes one or more of a key reception assembly, a voice input assembly, a touch input assembly, and a gesture control assembly.

According to an embodiment in the present application, the color correction device further includes a display screen, and the display screen is provided on the main body; and
the display screen is configured to display a color correction control interface; and a displayed content of the color correction control interface includes one or more of color correction start/stop information, color correction parameter setting information, and color correction mode switching information.

According to an embodiment in the present application, the color correction device is a handheld device.

According to another aspect of the present application, a color correction system for an external flash is further proposed in the present application, including the external flash and the color correction device. An illumination information acquisition circuit of the color correction device is configured to acquire illumination information of the external flash; a color correction processing circuit of the color correction device is configured to perform color correction processing according to the illumination information and generate color correction result information; and a communication circuit of the color correction device communicates with the external flash, so as to send the color correction result information to the external flash, so that the external flash corrects illumination according to the color correction result information.

In the solution of the present application, the illumination information acquisition circuit can acquire the illumination information of the external flash. The color correction processing circuit performs color correction processing according to the illumination information to generate color correction result information. The color correction result information is used for being transmitted to the external flash so as to correct illumination of the external flash. Thus, the color correction device of the solution of the present application realizes the illumination correction of the external flash.

In addition, the color correction device of the present application integrates the functions of illuminance information acquisition, color correction processing, and communication, without using other external devices, which improves the convenience of color correction for external flash and improves the color correction efficiency.

It should be understood that the above general description and the following detailed description are exemplary and explanatory only and are not intended to limit the present application.

### BRIEF DESCRIPTION OF THE DRAWINGS

The above and other objects, features, and advantages of the present application will become more apparent by describing in detail exemplary embodiments thereof with reference to the drawings.
FIG. 1 shows a schematic structural diagram of a color correction device according to an example embodiment.
FIG. 2 is a side view of FIG. 1.
FIG. 3 shows a circuit structure block diagram of a color correction device according to an example embodiment.
FIG. 4 shows a circuit structure block diagram of a color correction device connected to an external flash according to an example embodiment.
FIG. 5 shows a circuit structure block diagram of a color correction device connected to an external flash according to another example embodiment.
FIG. 6 shows a circuit structure block diagram of a color correction device connected to an external flash according to another example embodiment.

Illustrations of reference numerals: 10. external flash; 20. color correction device; 201. main body; 202. light pick-up portion; 203. display screen; 204. key; 205. switch key; 21. illumination information acquisition circuit; 22. color correction processing circuit; 23. communication circuit; 24. programming circuit; and 25. timing control circuit.

### DETAILED DESCRIPTION OF THE EMBODIMENTS

Although the present application can readily be embodied in different forms of embodiment, however, only some of the specific embodiments are shown in the drawings and will be described in detail in the description, while it is understood that the description is to be regarded as an exemplary illustration of the principles of the present application and is not intended to limit the present application to those described herein.

Thus, one feature pointed out in the description is intended to illustrate one of the features of one embodiment of the present application and is not intended to imply that each embodiment of the present application must have the illustrated feature. In addition, it should be noted that many features are described in the description. Although certain features may be combined to illustrate a possible system design, these features may also be used for other unspecified combinations. Therefore, unless otherwise stated, the illustrated combinations are not intended to be limiting.

In the embodiments illustrated in the drawings, indications of direction (such as up, down, left, right, front, and rear) are used to explain that the structure and movement of the various elements of the present application are not absolute but relative. These descriptions are appropriate when these elements are in the positions shown in the drawings. If the description of the positions of these elements changes, the indications of these directions will also be changed accordingly.

The exemplary embodiments will now be described more fully with reference to the accompanying drawings. However, the example embodiments can be implemented in a variety of forms and should not be construed as being limited to the examples set forth herein. Rather, these embodiments are provided so that the present application will be more comprehensive and complete, and the concept of example embodiments will be fully communicated to those skilled in the art. The drawings are only schematic illustrations of the present application and are not necessarily drawn to scale. Like reference numerals in the drawing denote identical or similar parts and thus repetitive descriptions thereof will be omitted.

The preferred embodiment of the present application is further elaborated below in conjunction with the drawings of the description.

In the present application, a color correction device is first proposed, where the color correction device is used for performing color correction on an external flash. Color correction may refer to matching the actual illumination parameters of the external flash with set illumination parameters, and it may also refer to adjusting the consistency of illumination parameters of each LED lamp bead in the external flash. Illumination parameters may include parameters such as luminance, color temperature, and saturation.

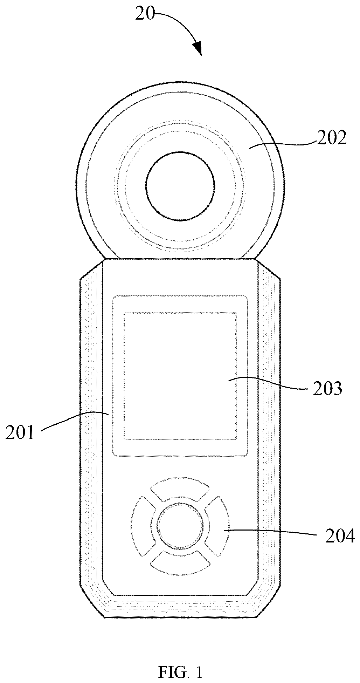

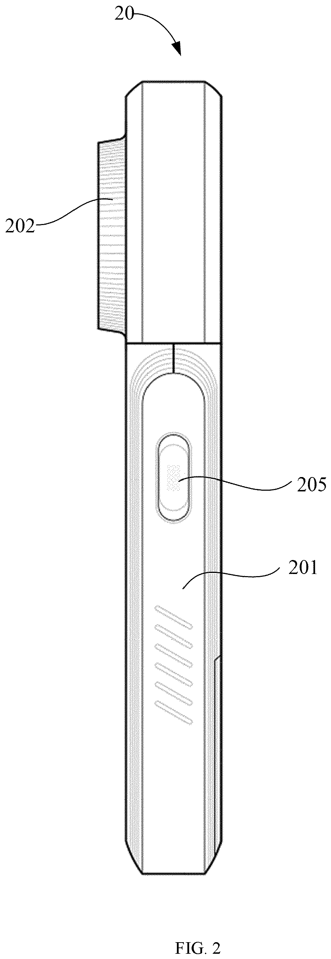

Referring to FIG. 1 and FIG. 2, in an embodiment, a color correction device 20 includes a main body 201 and a light pick-up portion 202 protruding from one side of the main body 201. Specifically, the main body 201 is roughly square, and an accommodating chamber is provided inside the main body 201 to accommodate one or more circuit boards. It should be understood that relevant circuits of the present application may be partially or completely laid on the circuit board. A side surface of the main body 201 is further provided with a switch key 205, and when the switch key 205 is on, the color correction device 20 is turned on, and when the switch key 205 is off, the color correction device 20 is turned off. The light pick-up portion 202 is located on the upper side of the main body. Since the light radiation range of the external flash 10 is roughly circular, the light pick-up portion 202 provided in the present application is also roughly circular, so as to uniformly pick up a light beam emitted by the external flash 10. The color correction device 20 in the present application may be a handheld device, so as to facilitate a user to carry outdoors to perform color correction on the external flash at any time.

The main body 201 and the light pick-up portion 202 may be detachably connected. Specifically, the connection may be a snap-fit connection or a connection that is formed by cooperation between a slide chute and a sliding block, where the slide chute is provided on the main body 201, and the sliding block is provided on the light pick-up portion 202.

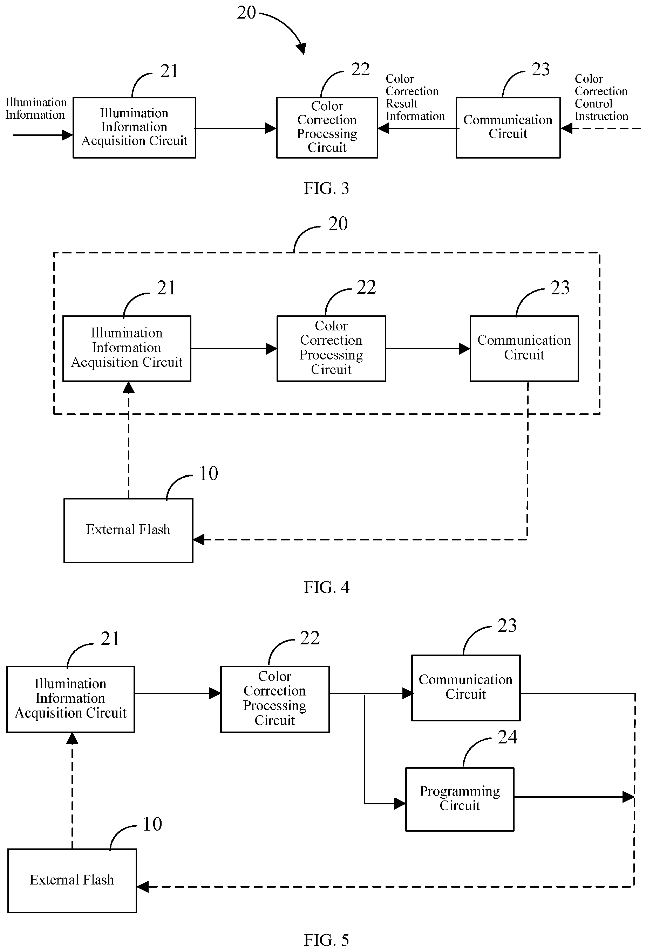

Please refer to FIG. 3 and FIG. 4. In an embodiment, the color correction device 20 includes an illumination information acquisition circuit 21, a color correction processing circuit 22 and a communication circuit 23. The illumination information acquisition circuit 21 is located in the light pick-up portion 202 and is configured to acquire the illumination information of the external flash 10. The color correction processing circuit 22 is electrically connected to the illumination information acquisition circuit 21 to perform color correction processing according to the illumination information and generate color correction result information. The communication circuit 23 is used for communicating with external flash 10. The communication circuit 23 is electrically connected to the color correction processing circuit 22 to receive the color correction result information and transmit the color correction result information to the external flash 10 to allow the external flash 10 to correct illumination according to the color correction result information.

Here, the illumination information includes one or more pieces of information on brightness, chroma, saturation, etc. Here, all light beams emitted by the external flash 10 may be taken as a whole to acquire parameters such as brightness, chroma, and saturation. In another embodiment, in the case that a flash includes multiple LED light sources, the illumination information is one or more parameters of brightness, chroma, saturation, and the like of each LED light source. That is, in this embodiment, each LED light source is used as a minimum circuit to carry out illumination correction on each LED in a targeted manner, so as to improve the accuracy of illumination correction. During the detection, each LED light source may be enabled to emit light independently, thereby obtaining the illumination information of the LED light source.

The illumination information acquisition circuit 21 may include a color pick-up circuit, a data conversion circuit, a filter circuit, etc. Schematically, according to the target to be corrected, the color pick-up circuit may include various types of light sensors, such as brightness sensor, chroma sensor, and color temperature sensor.

An acquisition window is provided on the housing, and the position of the acquisition window is directly opposite to the position of the illumination information acquisition circuit 21. The acquisition window is provided facing the illumination surface of the external flash 10, thus the color pick-up circuit can receive the light emitted by the external flash 10. Here, the light emitted by the external flash 10 may be picked up multiple times. Schematically, the external flash 10 is enabled to operate in various illumination modes and the illumination information in each mode is sampled. Here, the illumination modes include flashing mode, modeling light mode, constant lighting mode, etc. In each mode, the illumination information is picked up at least once, and usually, multiple times of illumination information can be picked up sequentially according to a specific timing. The data conversion circuit is used to convert the analog quantity of the sampled illumination information into the corresponding digital quantity. The filter circuit is used for filtering an input or an output of the data conversion circuit to reduce noise interference.

The color correction processing circuit 22 may include a data sorting circuit and a data processing circuit. The data sorting circuit performs data sorting on the acquired illumination information data. The specific data sorting method may be determined according to a color correction algorithm, and the acquired illumination information data may also be sorted one by one according to the position of the LEDs in the external flash 10.

A color correction processing algorithm may be stored in the data processing circuit. The color correction processing algorithm is used to logically calculate the above sorted illumination data, thus generating color correction result information. The color correction result information may be an adjustment program or a specific illumination correction value.

In an example, the data processing circuit includes a correction chip, and a correction coefficient matrix is stored in the correction chip. Based on the correction coefficient matrix, the above sorted sampling data is calculated and processed.

In another example, a preset parameter value is compared with the sampled illumination information sorting data to correct a driver current of the external flash 10. The external flash 10 driven by the corrected driver current can enable the actual illumination parameters of the flash to exactly match the set parameters.

Here, the color correction processing circuit 22 and the illuminance information acquisition circuit 21 may both be circuits, and may be arranged on the same circuit board. The color correction processing circuit 22 and the illuminance information acquisition circuit 21 may also be set on two circuit boards separately to exchange data through wiring.

In the solution of the present application, the illumination information acquisition circuit 21 may acquire the illumination information of the external flash 10. The color correction processing circuit 22 performs color correction processing according to the illumination information and generates color correction result information. The communication circuit 23 is electrically connected to the color correction processing circuit to receive color correction result information and transmit the color correction result information to the external flash 10, so as to allow the external flash 10 to correct illumination according to the color correction result information. Thus, the solution of the present application realizes the illumination correction of the external flash 10.

In addition, the color correction device 20 of the present application integrates the functions of illuminance information acquisition, color correction processing, and communication, without using other external devices, which improves the convenience of color correction for external flash and improves the color correction efficiency.

In an embodiment, the communication circuit 23 includes a wireless communication circuit 23, and the wireless communication circuit 23 is electrically connected to the color correction processing circuit 22, so as to receive the color correction result information and transmit the color correction result information to the external flash 10 through wireless transmission.

Here, the wireless communication circuit 23 may be built into the color correction device 20 or external to the color correction device 20, for example, an external USB wireless transceiver. The wireless communication circuit 23 may be a Bluetooth module, a WIFI module, a Zig-Bee module, a broadcast module, etc. It should be understood that a wireless communication module connected to the wireless communication circuit 23 should be provided in the external flash 10.

This embodiment improves the convenience of communication between the color correction device 20 and the external flash 10. And the arrangement of the wireless communication circuit 23 can eliminate the need for providing interfaces on the color correction device 20 and the external flash 10. More importantly, the wireless communication circuit 23 may allow the distance between the color correction device 20 and the external flash 10 to be flexibly adjusted, so that different illumination information can be acquired based on different distances, improving the accuracy of correction and the flexibility of the correction target. Here, the correction target may be provided as the correction of illumination parameters of the external flash 10 under different illumination distances.

In another embodiment, the color correction device 20 further includes a communication interface, and the communication interface is electrically connected with the color correction processing circuit 22, and the communication interface is electrically connected to the external flash 10 through a connecting wire to transmit the color correction result information to the external flash 10. Here, the communication interface is one of a USB interface, a TYPE C interface, an RS232 interface, and an RS485 interface. Here, there may be one or more communication interfaces.

The external flash 10 includes a control chip, a driving circuit, and a light source circuit. The control chip sends a control signal to the driving circuit, and then the driving circuit drives the light source circuit to emit light. In an embodiment, the color correction processing circuit 22 sends the color correction result information to the control chip or the driving circuit of the external flash 10 through the communication circuit 23, so as to directly correct the illumination of the light source circuit. This embodiment may be used in a debugging process of the correction.

Referring to FIG. 5, FIG. 5 shows a circuit structure block diagram of a color correction device 20 connected to an external flash 10 according to another example embodiment. In another embodiment, the color correction device 20 further includes a programming circuit 24, and the programming circuit 24 is electrically connected to the color correction processing circuit 22 and the external flash 10, so as to program the color correction result information output through the communication interface on a control chip of the external flash 10. In this embodiment, the programming circuit 24 may be in handshake communication with the control chip to satisfy relevant communication protocols, so that the programming can proceed smoothly, thus fundamentally correcting the deviation of the illumination effect of the external flash 10.

Here, the programming circuit 24 and the color correction processing circuit 22 may be directly or indirectly electrically connected, that is, the programming circuit 24 is electrically connected to the color correction processing circuit 22 through the communication circuit 23; alternatively, the programming circuit 24 may be directly connected to the color correction processing circuit 22 electrically. The programming circuit 24 has a dedicated programming interface. The programming circuit 24 may be built into the housing of the color correction device 20; alternatively, the programming circuit 24 may be external to the housing of the color correction device 20 to form an independent module.

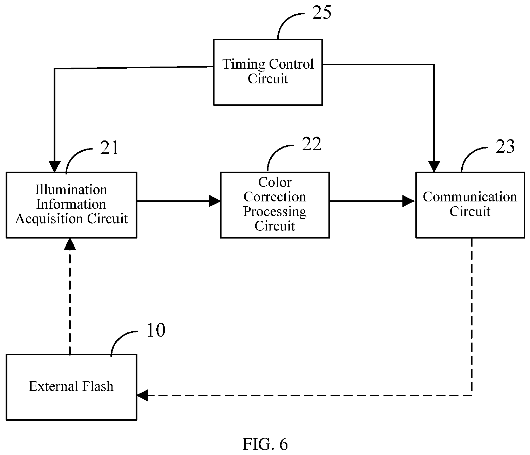

FIG. 6 shows a circuit structure block diagram of a color correction device 20 connected to an external flash 10 according to another example embodiment. In an embodiment, the color correction device 20 further includes a timing control circuit 25, and the timing control circuit 25 is electrically connected to the illumination information acquisition circuit 21 and the external flash 10. The timing control circuit 25 is used for controlling the external flash 10 to emit light at a preset timing and controlling the illumination information acquisition circuit 21 to acquire the illumination information at a preset timing accordingly.

Here, the timing control circuit 25 is used to send a timing control instruction, and the timing control instruction may include an illumination mode execution sequence, an illumination frequency, a brightness-changing timing, a color-changing timing, and the like of the external flash 10. The timing control circuit 25 also controls the illumination information acquisition circuit 21 to acquire the light emitted by the external flash 10 in a preset timing, so that an acquisition timing is synchronized with the illumination timing, so that timing information corresponding to the acquired illumination information can be determined, and the accuracy of correction can be improved. In addition, this embodiment allows the illumination information acquisition circuit 21 not to acquire data when the external flash 10 does not emit light, which is conducive to reducing noise interference of the illumination information acquisition circuit 21 and improving the accuracy of data sorting; and it is also conducive to energy conservation.

In an embodiment, the color correction device 20 further includes a human-computer interaction assembly, and the human-computer interaction assembly is provided on the main body. The human-computer interaction assembly is electrically connected to the illumination information acquisition circuit 21 and the color correction processing circuit 22, and the human-computer interaction assembly is used for one or more of receiving a color correction instruction, receiving a color correction setting parameter, and switching color correction modes.

In an example, the human-computer interaction assembly may be a touch-control screen assembly, a key assembly, a voice input assembly, and the like for the user to input color correction relevant instructions. When the user sends a color correction instruction, the illumination information acquisition circuit 21 starts to acquire illumination information, and then the color correction processing circuit 22 starts to process data. The received color correction setting parameters include a color correction accuracy parameter, a color correction target parameter, etc. The color correction mode may include a brightness correction mode, a chroma correction mode, a saturation correction mode, and a comprehensive correction mode (simultaneously correcting brightness, chroma, saturation, etc.). In a specific embodiment, the human-computer interaction assembly includes a plurality of keys 204. The user presses the key 204 to send a color correction instruction, set a color correction parameter, and switch color correction modes.

In an embodiment, the color correction device 20 further includes a display screen 203, and the display screen 203 is provided on the main body 201. The display screen 203 is electrically connected to the color correction processing circuit 22, so as to display a color correction control interface under the control of the color correction processing circuit 22. Here, a color correction application software may be stored in the color correction device 20 (specifically, may be in the color correction processing circuit 22), and when the color correction application software is running, a color correction control interface can be displayed on a display screen 203. The color correction control interface includes multiple controls for the user to send a color correction control instruction, set a color correction parameter, select a color correction mode, etc. The color correction control interface may further include a display window to display the color correction progress. This embodiment improves the intelligence of the color correction device 20, improves the human-computer interaction ability, and makes it convenient for the user to correct the different parameters of the external flash 10 according to their own needs, and correct these parameters to target parameters that meet their own requirements.

The "circuit" mentioned in the above-mentioned embodiments, such as the illumination information acquisition circuit 21, the color correction processing circuit 22, the communication circuit 23, the programming circuit 24, the timing control circuit 25, the receiving circuit, and the display circuit, can be built by adopting physical circuits or specific chips.

Moreover, the above illumination information and color correction result information only represent the substantial meaning of the signal. In fact, in the process of signal transmission, the form will change. For example, the conversion of the analog quantity and the digital quantity, transmission in the form of a single signal or packaging into data packets, etc., are not specifically limited herein.

Another aspect of the present application further proposes a color correction system for an external flash. The color correction system includes the external flash and the color correction device 20 in the above embodiments. An illumination information acquisition circuit 21 of the color correction device 20 is used for acquiring illumination information of the external flash; a color correction processing circuit 22 of the color correction device 20 is used for performing color correction processing according to the illumination information and generating color correction result information; and a communication circuit 23 of the color correction device 20 communicates with the external flash 10, so as to send the color correction result information to the external flash, so that the external flash 10 corrects illumination according to the color correction result information.

While the present application has been described with reference to several exemplary embodiments, it should be understood that the terms used herein are illustrative and exemplary and are not limiting. Since the present application can be embodied in various forms without departing from the spirit or essence of the invention, it should therefore be understood that the foregoing embodiments are not limited to any of the foregoing details, but should be construed broadly within the spirit and scope of the appended claims, so that all variations and modifications falling within the scope of the claims or their equivalents are to be covered by the appended claims.

## Claims

1. A color correction device, configured to perform color correction on an external flash, comprising:
an illumination information acquisition circuit configured to acquire illumination information of the external flash;
a color correction processing circuit electrically connected to the illumination information acquisition circuit, so as to be configured to perform color correction processing according to the illumination information and generate color correction result information; and
a communication circuit configured to communicate with the external flash, the communication circuit being electrically connected to the color correction processing circuit, so as to receive the color correction result information and send the color correction result information to the external flash, so that the external flash corrects illumination according to the color correction result information.

2. The color correction device according to claim 1, wherein the communication circuit comprises a wireless communication circuit, and the wireless communication circuit is electrically connected to the color correction processing circuit, so as to receive the color correction result information and transmit the color correction result information to the external flash through wireless transmission.

3. The color correction device according to claim 1, wherein the communication circuit comprises a communication interface, and the communication interface is electrically connected to the color correction processing device, and the communication interface is electrically connected to the external flash through a connection wire, so as to transmit the color correction result information to the external flash.

4. The color correction device according to claim 3, wherein the color correction device further comprises a programming circuit, and the programming circuit is electrically connected to the color correction processing circuit and the external flash, so as to program the color correction result information output through the communication interface on a control chip of the external flash.

5. The color correction device according to claim 1, wherein the color correction device further comprises a timing control circuit, and the timing control circuit is electrically connected to the illumination information acquisition circuit and the external flash; and wherein the timing control circuit is configured to control the external flash to emit light at a preset timing and control the illumination information acquisition circuit to acquire the illumination information at a preset timing.

6. The color correction device according to claim 1, wherein the illumination information comprises one or more of brightness, chroma and saturation of the light emitted by the external flash.

7. The color correction device according to claim 1, wherein the external flash comprises a plurality of LED light sources, wherein the illumination information comprises one or more of brightness, chroma and saturation of each LED light source of the plurality of LED light sources.

8. The color correction device according to claim 1, wherein the color correction device comprises a main body and a light pick-up portion protruding from one side of the main body, and the illumination information acquisition circuit is located in the light pick-up portion.

9. The color correction device according to claim 8, wherein the main body is detachably connected to the light pick-up portion.

10. The color correction device according to claim 8, wherein the color correction device further comprises a human-computer interaction assembly, and the human-computer interaction assembly is provided on the main body; and
wherein the human-computer interaction assembly is electrically connected to the illumination information acquisition circuit and the color correction processing circuit, and the human-computer interaction assembly is used for one or more of receiving a color correction instruction, receiving a color correction setting parameter, and switching color correction modes.

11. The color correction device according to claim 10, wherein the human-computer interaction assembly comprises one or more of a key reception assembly, a voice input assembly, a touch input assembly, and a gesture control assembly.

12. The color correction device according to claim 8, wherein the color correction device further comprises a display screen, and the display screen is provided on the main body; and
wherein the display screen is configured to display a color correction control interface, and wherein a displayed content of the color correction control interface includes one or more of color correction start/stop information, color correction parameter setting information, and color correction mode switching information.

13. The color correction device according to claim 1, wherein the color correction device is a handheld device.

14. A color correction system for an external flash, comprising the external flash and a color correction device according to any one of claims 1 to 13, wherein the illumination information acquisition circuit is configured to acquire illumination information of the external flash, wherein the color correction processing circuit of the color correction device is configured to perform color correction processing according to the illumination information and generate color correction result information, wherein the communication circuit of the color correction device communicates with the external flash, so as to send the color correction result information to the external flash, so that the external flash corrects illumination according to the color correction result information.
